# EUROPEAN PATENT APPLICATION

(11) **EP 4 550 896 A1**
(43) Date of publication of application: **07.05.2025**
(21) Application number: 23830133.7
(22) Date of filing: 25.06.2023
(51) Int. Cl.: H04W 52/02

(54) **COMMUNICATION PROCESSING METHOD AND APPARATUS, AND TERMINAL AND READABLE STORAGE MEDIUM**

(30) Priority: 28.06.2022 CN 202210751243
(71) Applicant: Vivo Mobile Communication Co., Ltd., Dongguan, Guangdong 523863 (CN)
(72) Inventor: ZHU, Yuejun, Dongguan, Guangdong 523863 (CN)
(74) Representative: Conti, Marco
(86) International application number: PCT/CN2023/102107
(87) International publication number: WO 2024/001955

(57) **Abstract**

This application discloses a communication processing method and apparatus, a terminal, and a readable storage medium, and pertains to the field of communication technologies. The communication processing method is applied to a terminal including a first SIM card and a second SIM card. The method includes: in a case that the terminal performs initial registration or location update, prohibiting the first SIM card that is conducting an IMS call from executing ENDC B1 measurement, and/or disabling ENDC capability of the second SIM card; wherein the terminal is currently able to use mobile data through the first SIM card, and the terminal is currently unable to use mobile data through the second SIM card.

## Description

### CROSS-REFERENCE TO RELATED APPLICATIONS

This application claims priority to Chinese Patent Application No. 202210751243.3, filed in China on June 28, 2022, which is incorporated herein by reference in its entirety.

### TECHNICAL FIELD

This application pertains to the field of communication technologies, and specifically relates to a communication processing method and apparatus, a terminal, and a readable storage medium.

### BACKGROUND

The 5^{th} generation mobile communication technology (5th Generation Mobile Communication Technology, 5G) is a new generation of mobile communication technology, which includes two networking schemes: non-standalone (Non-Standalone, NSA) networking and standalone (Standalone, SA) networking. There are significant differences between the two networking schemes. NSA networking is deployed based on the infrastructure of the existing fourth generation mobile communication technology (Fourth Generation Mobile Communication Technology, 4G), with some services and functions still relying on the 4G network. It has the advantages of lowering construction cost and allowing for rapid coverage. In NSA networking, 4G base stations are modified for transmitting 5G signals, enabling quick arrangement at low cost in the initial stage, thereby realizing rapid popularization of 5G and allowing as many users as possible to enjoy it. Whereas, SA requires construction of independent base stations, which entails high time costs for large-scale coverage. However, SA features higher speed, lower latency, and the like. NSA networking relies on mature long term evolution (Long Term Evolution, LTE) network coverage while exerting the high throughput of NR nodes (NR Node B, gNB) in evolved nodeB dual connectivity (Evolved NodeB Dual Connectivity, ENDC). However, the LTE and NR dual connectivity increases power consumption of new radio (New Radio, NR) connections and in turn increases power consumption of a terminal, affecting the user experience in terms of endurance.

Currently, after a terminal register to an ENDC network, calls are made through voice over long-term evolution (Voice over Long-Term Evolution, VoLTE) calls. However, in some cases, the network still makes the terminal to add NR measurement configuration during the calls. Upon receiving the measurement configuration and meeting measurement event conditions, the terminal triggers the reporting of the measurement reports, and then the network triggers the addition of a second cell group (Second Cell Group, SCG) to increase speed. VoLTE is a call service with quality of service (Quality of Service, QoS) guarantees, can guarantee call quality without requiring SCG to increase the speed, and currently does not support establishment of a dedicated bearer through SCG. Actions such as frequent NR cell measurement and SCG addition performed by the terminal during calls do not improve user experience but increase power consumption in a call scenario under an ENDC network. In addition, when a subscriber identity module (Subscriber Identity Module, SIM) card using mobile data is engaged in a low-latency service such as gaming, if another SIM card receives packet-switched paging (PS Paging) from the network and is added with a SCG, situations such as lag or disconnection of the SIM card using mobile data are caused.

### SUMMARY

Embodiments of this application are intended to provide a communication processing method and apparatus, a terminal, and a readable storage medium, so as to address the issues that in the related art, frequent NR cell measurement and SCG addition during calls do not improve user experience but increase power consumption of call scenarios in an ENDC network and cause delays or disconnections in SIM cards using mobile data.

According to a first aspect, an embodiment of this application provides a communication processing method applied to a terminal including a first SIM card and a second SIM card. The method includes:
in a case that the terminal performs initial registration or location update, prohibiting the first SIM card that is conducting an IMS call from executing ENDC B1 measurement, and/or disabling ENDC capability of the second SIM card; where
the terminal is currently able to use mobile data through the first SIM card, and the terminal is currently unable to use mobile data through the second SIM card.

According to a second aspect, an embodiment of this application provides a communication processing apparatus applied to a terminal including a first SIM card and a second SIM card. The apparatus includes:
a processing module, configured to prohibit the first SIM card that is conducting an IMS call from executing ENDC B1 measurement and/or disable ENDC capability of the second SIM card in a case that the terminal performs initial registration or location update; where
the terminal is currently able to use mobile data through the first SIM card, and the terminal is currently unable to use mobile data through the second SIM card.

According to a third aspect, an embodiment of this application provides a terminal. The terminal includes a processor and a memory. The memory stores a program or instruction executable on the processor. When the program or instruction is executed by the processor, the steps of the method according to the first aspect are implemented.

According to a fourth aspect, an embodiment of this application provides a readable storage medium, where the readable storage medium stores a program or instruction, and when the program or instruction is executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instruction to implement the method according to the first aspect.

According to a sixth aspect, an embodiment of this application provides a computer program product. The program product is stored in a storage medium. The program product is executed by at least one processor to implement the method according to the first aspect.

In the embodiments of this application, when the terminal performs initial registration or location update in an ENDC network, the first SIM card that is conducting an IMS call is prohibited from executing ENDC B1 measurement, and the ENDC capability of the second SIM card is disabled, so that the first SIM card fails to execute ENDC B1 measurement, thereby reducing power consumption of the terminal. Since the ENDC capability of the second SIM card is disabled, actions such as SCG addition cannot be performed again, ensuring that the first SIM card is prevented from lag caused by interference when using mobile data, thus improving the user experience in network use.

### BRIEF DESCRIPTION OF DRAWINGS

FIG. 1 is a first schematic flowchart of a communication processing method according to an embodiment of this application;
FIG. 2 is a second schematic flowchart of a communication processing method according to an embodiment of this application;
FIG. 3 is a schematic flowchart of a network icon update method according to an embodiment of this application;
FIG. 4 is a schematic structural diagram of a communication processing apparatus according to an embodiment of this application;
FIG. 5 is a schematic structural diagram of a terminal according to an embodiment of this application; and
FIG. 6 is a schematic diagram of a hardware structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to indicate a specific order or sequence. It should be understood that data used in this way is used interchangeably in appropriate circumstances so that the embodiments of this application can be implemented in other orders than the order illustrated or described herein. In addition, "first", "second", and the like are usually used to distinguish objects of a same type but do not restrict a quantity of the objects. For example, there may be one or a plurality of first objects. In addition, "and/or" in the specification and claims represents at least one of connected objects, and the character "/" generally indicates that the contextually associated objects have an "or" relationship.

The following describes in detail the communication processing method and apparatus, terminal, and readable storage medium provided in the embodiments of this application by using specific embodiments and application scenarios thereof with reference to the accompanying drawings.

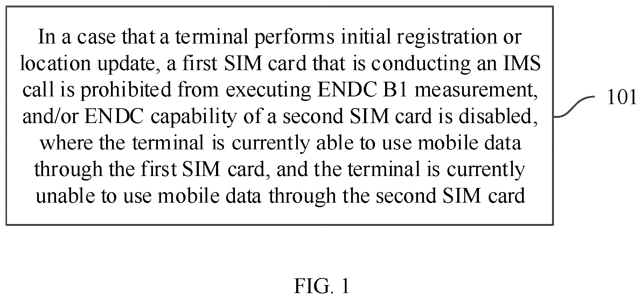

Referring to FIG. 1, FIG. 1 is a first schematic flowchart of a communication processing method according to an embodiment of this application. As shown in FIG. 1, an embodiment of one aspect of this application provides a communication processing method applied to a terminal including a first SIM card and a second SIM card. The method includes the following step.

Step 101: In a case that the terminal performs initial registration or location update, the first SIM card that is conducting an IMS call is prohibited from executing ENDC B1 measurement, and/or ENDC capability of the second SIM card is disabled, where
the terminal is currently able to use mobile data through the first SIM card, and the terminal is currently unable to use mobile data through the second SIM card.

In this embodiment, the terminal using this method is a dual-card terminal with a first SIM card and a second SIM card, where either the first SIM card or the second SIM card can be a primary card, and the remaining card is a secondary card. Optionally, the terminal can use mobile data through only one of the first SIM card or the second SIM card at the same time, and a user can switch between the first SIM card and the second SIM card to select the card for using mobile data.

In some embodiments, optionally, which one of the current first SIM card and second SIM card is used as a mobile data card able to use mobile data can be determined by a value of a data distribution service (Data Distribution Service, DDS) card stored in a NAS layer.

In some embodiments of this application, optionally, that the terminal performs initial registration specifically means the terminal performs initial registration in a cell with an ENDC environment. For example, the initial registration is a registration process initiated by the terminal and carrying a subscriber permanent identifier (Subscriber Permanent Identifier, SUPI). Optionally, a location update process performed by the terminal specifically refers to tracking area update (Tracking Area Update, TAU).

In this embodiment, if the terminal performs initial registration or location update in an ENDC environment, the terminal can first determine which of the first SIM card and the second SIM card is a mobile data card and which is a non-mobile data card. In other words, the terminal first determines which card is selected for using mobile data currently. If the terminal can currently use mobile data through the first SIM card, whether the first SIM card is currently registered for IP multimedia subsystem (IP Multimedia Subsystem, IMS) services and is in an IMS state can be further determined. If the first SIM card is conducting an IMS call, the terminal can prohibit the first SIM card from executing ENDC B1 measurement. If the first SIM card is not conducting an IMS call, the terminal does not conduct any process, that is, the terminal does not prohibit the first SIM card from executing ENDC B1 measurement. As such, by prohibiting the first SIM card that is conducting an IMS call from executing ENDC B1 measurement, a network side is inhibited from instructing NR cell measurement and SCG addition, thereby reducing power consumption in call scenarios and prolonging the battery life of the terminal.

In some embodiments of this application, it is necessary to determine whether to disable the ENDC B1 measurement of the first SIM card only in an IMS state, because there is no ENDC B1 measurement in other states, such as circuit switched fall back (CS Fall Back, CSFB) or CS Call.

For the non-mobile data card, when the terminal cannot use mobile data through the second SIM card, the ENDC capability of the second SIM card can be disabled. In other words, since the second SIM card is a non-mobile data card used in only IMS call scenarios instead of mobile data traffic usage scenarios, to prevent lag or latency caused when the second SIM card receives PS Paging sent by a network-side device and performs an SCG addition action while the first SIM card is using mobile data traffic and requires low latency, the ENDC capability of the second SIM card can be directly disabled. As a result, the second SIM card no longer performs NR cell measurement and SCG addition, thereby improving the stability when the first SIM card is using mobile data traffic and improving the use experience of the user.

In some embodiments of this application, the terminal can request a non-access stratum (Non-access stratum, NAS) module to disable the ENDC capability through a radio resource control (Radio Resource Control, RRC) module.

Thus, in these embodiments of this application, when the terminal performs initial registration or location update in an ENDC network, the first SIM card that is conducting an IMS call is prohibited from executing ENDC B1 measurement, and the ENDC capability of the second SIM card is disabled, so that the first SIM card fails to execute ENDC B1 measurement, thereby reducing power consumption of the terminal. Since the ENDC capability of the second SIM card is disabled, actions such as SCG addition cannot be performed again, ensuring that the first SIM card is prevented from lag caused by interference when using mobile data, thus improving the user experience in network use.

In some embodiments of this application, after the disabling the ENDC capability of the second SIM card, the method further includes:
reporting first capability information to a network-side device, where the first capability information indicates that the second SIM card does not support ENDC capability.

In these embodiments, after the ENDC capability of the second SIM card of the terminal is disabled, the first capability information can be added to an attach request (Attach Request) or a TAU Request sent to the network-side device to indicate that the second SIM card does not support ENDC capability. For example, the first capability information may be: Dual connectivity with NR: Not Support. Thus, the network-side device no longer instructs the second SIM card to perform actions such as SCG addition, thereby reducing power consumption.

In some other embodiments of this application, after the prohibiting the first SIM card of the terminal from performing ENDC B1 measurement, the method further includes:
enabling the first SIM card to perform ENDC B1 measurement in a case that the IMS call on the first SIM card has ended.

In other words, since the first SIM card that is conducting an IMS call is prohibited from performing ENDC B1 measurement, if the IMS call on the first SIM card has ended, the first SIM card can be enabled again to perform ENDC B1 measurement, that is, the first SIM card is allowed to perform ENDC B1 measurement, so that the first SIM card can perform ENDC B1 measurement and perform ENDC when meeting ENDCENDC requirements, thereby improving communication efficiency.

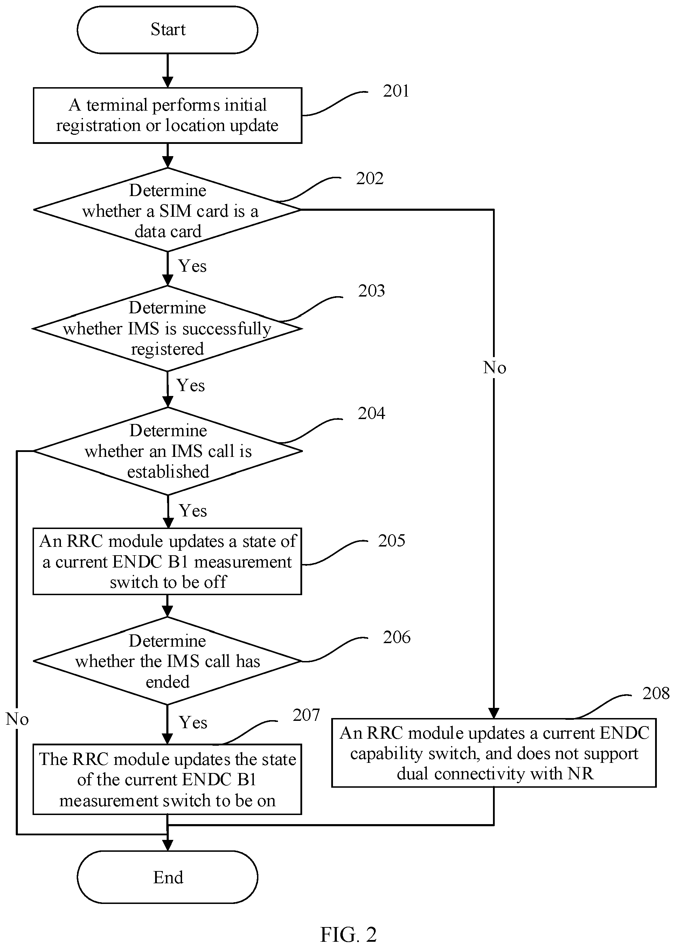

The following provides specific embodiments for description. Referring to FIG. 2, FIG. 2 is a second schematic flowchart of a communication processing method according to an embodiment of this application. As shown in FIG. 2, the communication processing method in this embodiment of this application includes the following steps.

Step 201: The terminal performs initial registration or location update.

Step 202: Determine whether the SIM card is a data card.

In this step, whether the SIM card is a data card is determined. If the SIM card is a data card, the terminal can currently use mobile data through this card; and if the SIM card is a non-data card, the terminal cannot currently use mobile data through this card. If the determination result is yes, step 203 is to be started; otherwise, step 208 is to be started.

Step 203: Determine whether IMS is successfully registered.

In this step, in a case that this card is a data card, whether the data card has successfully registered for IMS services is determined; if yes, step 204 is to be started; otherwise, the process is ended.

Step 204: Determine whether an IMS call is established.

In this step, in a case that the IMS services of the data card have been successfully registered, whether an IMS call has been established on this data card is further determined; if yes, step 205 is to be started; otherwise, the process is ended.

Step 205: An RRC module updates a state of a current ENDC B1 measurement switch to be off.

In a case that an IMS call has been established on the data card, the RRC module updates the state of the ENDC B1 measurement switch of the data card to be off, to be specific, the data card that is conducting an IMS call is prohibited from performing ENDC B1 measurement.

Step 206: Determine whether the IMS call has ended.

In this step, whether the IMS call has ended is determined. If the SIM call has ended, step 207 is to be started; otherwise, the state of the ENDC B1 measurement switch of the data card is still kept off.

Step 207: The RRC module updates the state of the current ENDC B1 measurement switch to be on.

If the IMS call on this data card has ended, the RRC module updates the state of the current ENDC B1 measurement switch to be a state before the IMS call, to be specific, this data card is enabled to perform ENDC B1 measurement.

Step 208: The RRC module updates the current ENDC capability switch, Dual connectivity with NR=Not Support.

In this step, if this card is a non-data card, the RRC module updates the current ENDC capability switch, to be specific, the ENDC capability of this card is disabled.

In this embodiment of this application, the method further includes:
acquiring first capability information for indicating whether a target card of the terminal supports ENDC, second capability information for indicating whether a network-side device currently connected to the terminal supports ENDC, and third capability information for indicating whether the network-side device currently connected to the terminal restricts the terminal from accessing an ENDC network; and
determining a network icon corresponding to the target card based on the first capability information, the second capability information, and the third capability information, where the target card is the first SIM card or the second SIM card.

In this embodiment, when the ENDC capability of the second SIM card is disabled, or the first SIM card is prohibited from performing ENDC B1 measurement, if signal icon formats are reported according to the existing logic, a user may have an illusion that a 5G phone does not support 5G on a display interface of the terminal. Therefore, in this embodiment of this application, in a case that the terminal performs initial registration or location update, the first capability information, second capability information, and third capability information are further acquired, where the first capability information is used to indicate whether the target card of the terminal supports ENDC, the second capability information is used to indicate whether the network-side device currently connected to the terminal supports ENDC, and the third capability information is used to indicate whether the network-side device currently connected to the terminal restricts the terminal from accessing the ENDC network. In this way, the network icon corresponding to the target card is determined based on the first capability information, the second capability information, and the third capability information. The target card in this embodiment is the first SIM card or the second SIM card. This can ensure the display accuracy of signal icon formats of the two cards of the terminal, thereby improving the use experience of the user.

In some embodiments of this application, the determining the network icon corresponding to the target card based on the first capability information, the second capability information, and the third capability information includes:
in a case that the network-side device currently connected to the terminal supports ENDC, the target card supports ENDC, and the network-side device does not restrict the terminal from accessing the ENDC network, displaying the network icon corresponding to the target card as a 5G icon;
in a case that the network-side device currently connected to the terminal does not support ENDC, displaying the network icon corresponding to the target card as a 4G icon; and
in a case that the network-side device currently connected to the terminal supports ENDC, the target card does not support ENDC, and the target card is the first SIM card, displaying the network icon corresponding to the target card as a 4G icon.

The first capability information for indicating whether the target card supports ENDC can be obtained by the terminal querying dual-connectivity evolved UMTS universal terrestrial radio access network and new radio (Dual Connectivity E-UTRAN and NR, DCNR) capability of the terminal by the NAS module. If a modem has enabled the capability of Option 3, it indicates that the target card has ENDC capability. If the query shows that the capability of Option 3 is not enabled, it indicates that the ENDC capability of the target card is disabled, meaning the target card does not have ENDC capability.

Optionally, in some embodiments, the network icon corresponding to the target card is displayed as a 4G icon if the network-side device currently connected to the terminal supports ENDC, the target card supports ENDC, and the network-side device restricts the terminal from accessing the ENDC network. In this case, the network-side device restricts the terminal from accessing the ENDC network, and therefore even if the network-side device supports ENDC capability and the terminal also supports ENDC capability, the network icon corresponding to the target card can only be displayed as a 4G icon.

Optionally, the second capability information for indicating whether the network-side device currently connected to the terminal supports ENDC can be obtained by the terminal querying system messages. To be specific, whether the network-side device supports ENDC is determined based on system messages (the system messages refer to broadcast messages sent from the network-side device to all terminals, and the system messages received by the terminal are stored in cache). Optionally, if a system message issued by an LTE network where the terminal is currently located carries upperLayerIndication-r15=true, it indicates that the current LTE network can serve as an anchor network for the ENDC network, meaning the LTE and NR networks can be accessed simultaneously for simultaneous data transmission.

Optionally, the third capability information for indicating whether the network-side device currently connected to the terminal restricts the terminal from accessing the ENDC network can be obtained by the terminal querying an MM (mobile station) module (that is, a mobility management module) for whether the network-side device restricts the terminal from accessing the ENDC network. Optionally, after the terminal receives Attach Accept or TAU Accept sent by the evolved UMTS terrestrial radio access network (Evolved UMTS Terrestrial Radio Access Network, E-UTRAN), if the terminal has read that a NAS message contains Restrict DCNR=0 or does not carry this field, it indicates that the network-side device allows the terminal to access, and this state is stored in the MM module.

In some other embodiments of this application, the target card is the second SIM card, and before the determining the network icon corresponding to the target card based on the first capability information, the second capability information, and the third capability information, the method further includes:
in a case that the first capability information indicates that the second SIM card does not support ENDC capability, acquiring target information, where the target information is used to indicate whether the ENDC capability of the second SIM card is disabled; and
the determining a network icon corresponding to the target card based on the first capability information, the second capability information, and the third capability information includes:
   in a case that the network-side device currently connected to the terminal supports ENDC, the target information indicates that the ENDC capability of the second SIM card is disabled, and the network-side device does not restrict the terminal from accessing the ENDC network, displaying a network icon corresponding to the second SIM card as a 5G icon; and
   in a case that the network-side device currently connected to the terminal supports ENDC, and the target information indicates that the ENDC capability of the second SIM card is not disabled, displaying the network icon corresponding to the second SIM card as a 4G icon.

In other words, in the case that the acquired first capability information indicates that the second SIM card does not support ENDC capability, if the ENDC capability of the second SIM card is disabled by the terminal, this operation is recorded in the target information. For example, when the target information is Dual_ENDC_Flag=1, it indicates that the terminal executes a policy of disabling the ENDC capability of the second SIM card; and when the target information is Dual_ENDC_Flag=0, it indicates that the terminal does not execute the policy of disabling the ENDC capability of the second SIM card. Whether the ENDC capability of the second SIM card is disabled can be determined by acquiring the target information.

If the network-side device currently connected to the terminal supports ENDC, the second SIM card does not support ENDC, the target information indicates that the ENDC capability of the second SIM card is disabled, and the network-side device does not restrict the terminal from accessing the ENDC network, it indicates that the ENDC capability of the second SIM card is disabled by only the terminal, but actually hardware of the second SIM card supports the ENDC capability. Therefore, the network icon corresponding to the second SIM card should be displayed as a 5G icon to give the user a correct prompt. If the terminal subsequently enables the ENDC capability of the second SIM card, the second SIM card can still perform ENDC and access a 5G network through dual connectivity. If the network-side device currently connected to the terminal supports ENDC, the second SIM card does not support ENDC, and the target information indicates that the ENDC capability of the second SIM card is not disabled, it indicates that the ENDC capability of the second SIM card is not disabled by the terminal, but actually the hardware of the second SIM card does not support the ENDC capability. Therefore, a network icon of the second SIM card should be displayed as a 4G icon.

In some embodiments of this application, determining the network icon corresponding to the target card can be performed in a case that the terminal performs initial registration or location update. To be specific, the first capability information for indicating whether the target card of the terminal supports ENDC, the second capability information for indicating whether the network-side device currently connected to the terminal supports ENDC, and third capability information for indicating whether the network-side device currently connected to the terminal restricts the terminal from accessing the ENDC network are acquired in the case that the terminal performs initial registration or location update.

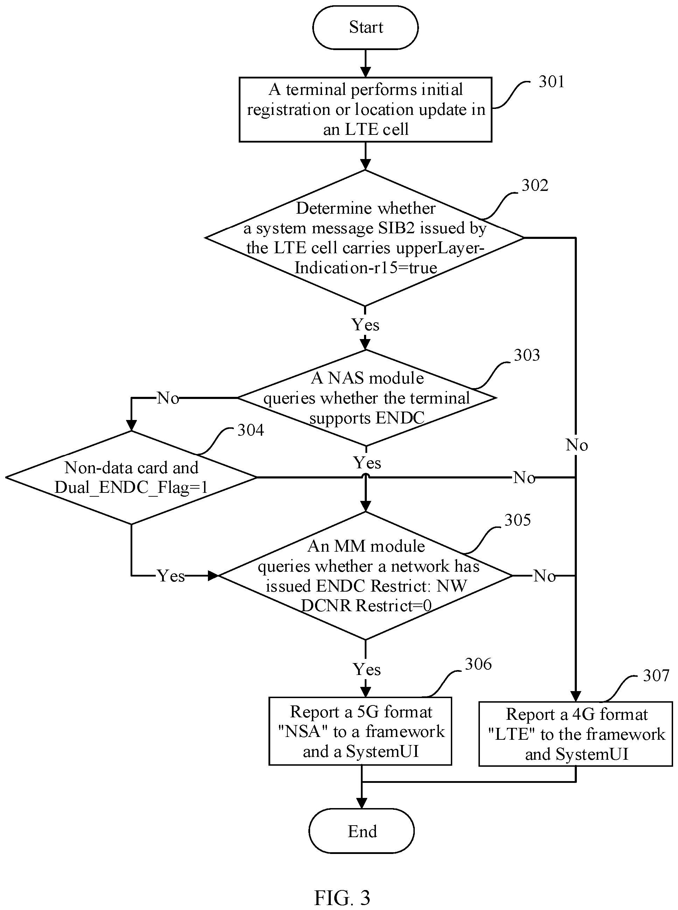

The following provides detailed description with reference to specific embodiments. Referring to FIG. 3, FIG. 3 is a schematic flowchart of a network icon update method according to an embodiment of this application. As shown in FIG. 3, the network icon update method in this embodiment of this application includes the following steps.

Step 301: The terminal performs initial registration or location update in an LTE cell.

Step 302: Determine whether a system message SIB2 issued by the LTE cell where the terminal is located carries upperLayerIndication-r15=true; if yes, skip to step 303; otherwise, skip to step 307.

In this step, the system message SIB2 can be used as second capability information. Whether the system message SIB2 carries upperLayerIndication-r15-true indicates whether the network-side device currently connected to the terminal supports ENDC. In other words, if the system message SIB2 carries upperLayerIndication-r15=true, it indicates that the network-side device currently connected to the terminal supports ENDC; and if the system message SIB2 does not carry upperLayerIndication-r15=true, it indicates that the network-side device currently connected to the terminal does not support ENDC.

Step 303: The NAS module queries whether the terminal supports ENDC.

In this step, optionally, the terminal requests the NAS module to query DCNR capability of the terminal. If UE ENDC Support=1, it indicates that the terminal supports ENDC capability; and if UE ENDC Support=0, it indicates that the terminal does not support ENDC capability, where if a determination result is no, step 304 is to be started; and if the determination result is yes, step 305 is to be started.

Step 304: Non-data card and Dual_ENDC_Flag=1.

In this step, if it is queried that the terminal does not support ENDC capability, it is necessary to further determine whether the card is a non-data card. If the card is a non-data card and Dual_ENDC_Flag=1 (that is, the target information), it indicates that the card has executed a policy of disabling the ENDC capability, and therefore step 305 is to be started. If the condition that the card is a non-data card and Dual_ENDC_Flag=1 is not satisfied, step 306 is to be started.

Step 305. The MM module queries whether the network has issued ENDC Restricted: NW DCNR Restrict=0.

In this step, the terminal queries through the MM module whether the network has issued ENDC Restricted: NW DCNR Restrict=0. If yes, it indicates that the network-side device restricts the terminal from accessing the ENDC network, and step 306 is to be started; and if no, it indicates that the network-side device does not restrict the terminal from accessing the ENDC network, and step 307 is to be started.

Step 306: Report a 5G format "NSA" to a framework and a SystemUI.

In this step, after the foregoing plurality of steps, it can be determined that a network icon of the card should be a 5G icon. Therefore, an icon in a 5G format can be reported to the framework and SystemUI.

Step 307: Report a 4G format "LTE" to the framework and SystemUI.

In this step, after the foregoing plurality of steps, it can be accurately determined that the network icon of the card should be a 4G icon. Therefore, an icon in a 4G format can be reported to the framework and SystemUI.

Through the network icon update method in this embodiment, network icons that should be displayed for the current double cards can be accurately determined, thereby improving the user experience.

In conclusion, in this embodiment of this application, when the terminal performs initial registration or location update in the ENDC network, the first SIM card that is conducting an IMS call is prohibited from executing ENDC B1 measurement, and the ENDC capability of the second SIM card is disabled, so that the first SIM card fails to execute ENDC B1 measurement, thereby reducing power consumption of the terminal. Since the ENDC capability of the second SIM card is disabled, actions such as SCG addition cannot be performed again, ensuring that the first SIM card is prevented from lag caused by interference when using mobile data, thus improving the user experience in network use.

The communication processing method provided in the embodiments of this application may be executed by a communication processing apparatus. In the embodiments of this application, the communication processing method being executed by a communication processing apparatus is used as an example for describing the communication processing apparatus provided in the embodiments of this application.

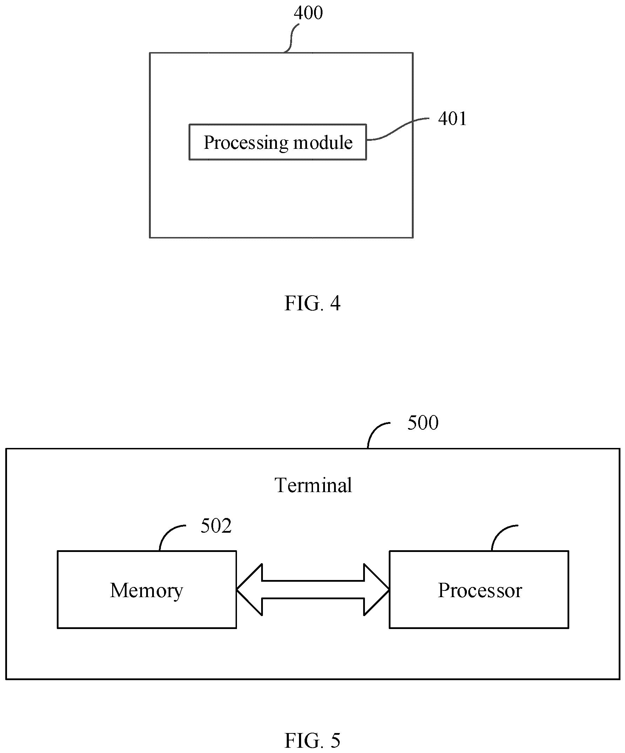

Referring to FIG. 4, FIG. 4 is a schematic structural diagram of a communication processing apparatus according to an embodiment of this application. As shown in FIG. 4, an embodiment of another aspect of this application provides a communication processing apparatus applied to a terminal including a first SIM card and a second SIM card. The apparatus 400 includes:
a processing module 401, configured to prohibit the first SIM card that is conducting an IMS call from executing ENDC B1 measurement and/or disable ENDC capability of the second SIM card in a case that the terminal performs initial registration or location update; where
the terminal is currently able to use mobile data through the first SIM card, and the terminal is currently unable to use mobile data through the second SIM card.

In this embodiment of this application, when the terminal performs initial registration or location update in an ENDC network, the first SIM card that is conducting an IMS call is prohibited from executing ENDC B1 measurement, and the ENDC capability of the second SIM card is disabled, so that the first SIM card fails to execute ENDC B1 measurement, thereby reducing power consumption of the terminal. Since the ENDC capability of the second SIM card is disabled, actions such as SCG addition cannot be performed again, ensuring that the first SIM card is prevented from lag caused by interference when using mobile data, thus improving the user experience in network use.

Optionally, the apparatus further includes:
a reporting module, configured to report first capability information to a network-side device, where the first capability information indicates that the second SIM card does not support ENDC capability.

Optionally, the apparatus further includes:
a recovery module, configured to enable the first SIM card to perform ENDC B1 measurement in a case that the IMS call on the first SIM card has ended.

Optionally, the apparatus further includes:
a first acquiring module, configured to acquire first capability information for indicating whether a target card of the terminal supports ENDC, second capability information for indicating whether a network-side device currently connected to the terminal supports ENDC, and third capability information for indicating whether the network-side device currently connected to the terminal restricts the terminal from accessing the ENDC network; and
a determining module, configured to determine a network icon corresponding to the target card based on the first capability information, the second capability information, and the third capability information, where the target card is the first SIM card or the second SIM card.

Optionally, the determining module includes:
a first determining unit, configured to display the network icon corresponding to the target card as a 5G icon if the network-side device currently connected to the terminal supports ENDC, the target card supports ENDC, and the network-side device does not restrict the terminal from accessing the ENDC network;
a second determining unit, configured to display the network icon corresponding to the target card as a 4G icon in a case that the network-side device currently connected to the terminal does not support ENDC; and
a third determining unit, configured to display the network icon corresponding to the target card as a 4G icon in a case that the network-side device currently connected to the terminal supports ENDC, the target card does not support ENDC, and the target card is the first SIM card.

Optionally, the target card is the second SIM card, and the apparatus further includes:
a second acquiring module, configured to acquire target information in a case that the first capability information indicates that the second SIM card does not support ENDC capability, where the target information is used to indicate whether the ENDC capability of the second SIM card is disabled.

The determining module includes:
a fourth determining unit, configured to display a network icon corresponding to the second SIM card as a 5G icon in a case that the network-side device currently connected to the terminal supports ENDC, the target information indicates that the ENDC capability of the second SIM card is disabled, and the network-side device does not restrict the terminal from accessing the ENDC network; and
a fifth determining unit, configured to display the network icon corresponding to the second SIM card as a 4G icon in a case that the network-side device currently connected to the terminal supports ENDC, and the target information indicates that the ENDC capability of the second SIM card is not disabled.

In this embodiment of this application, when the terminal performs initial registration or location update in an ENDC network, the first SIM card that is conducting an IMS call is prohibited from executing ENDC B1 measurement, and the ENDC capability of the second SIM card is disabled, so that the first SIM card fails to execute ENDC B1 measurement, thereby reducing power consumption of the terminal. Since the ENDC capability of the second SIM card is disabled, actions such as SCG addition cannot be performed again, ensuring that the first SIM card is prevented from lag caused by interference when using mobile data, thus improving the user experience in network use.

The communication processing apparatus in this embodiment of this application may be a terminal, or may be a component such as an integrated circuit or chip in a terminal. For example, the terminal may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a personal computer (personal computer, PC), a television (television, TV), a smart speaker, a teller machine, a self-service machine, or the like. This is not specifically limited in the embodiments of this application.

The communication processing apparatus in the embodiments of this application may be an apparatus having an operating system. The operating system may be an Android (Android) operating system, may be an iOS operating system, or may be another possible operating system. This is not specifically limited in the embodiments of this application.

The communication processing apparatus provided in the embodiments of this application can implement the processes implemented in the method embodiment in FIG. 1 to FIG. 3. To avoid repetition, details are not described herein again.

Optionally, as shown in FIG. 5, an embodiment of this application further provides a terminal 500 including a processor 501 and a memory 502. The memory 502 stores a program or instruction capable of running on the processor 501. When the program or instruction is executed by the processor 501, the steps of the foregoing communication processing method embodiment are implemented, with the same technical effects achieved. To avoid repetition, details are not described herein again.

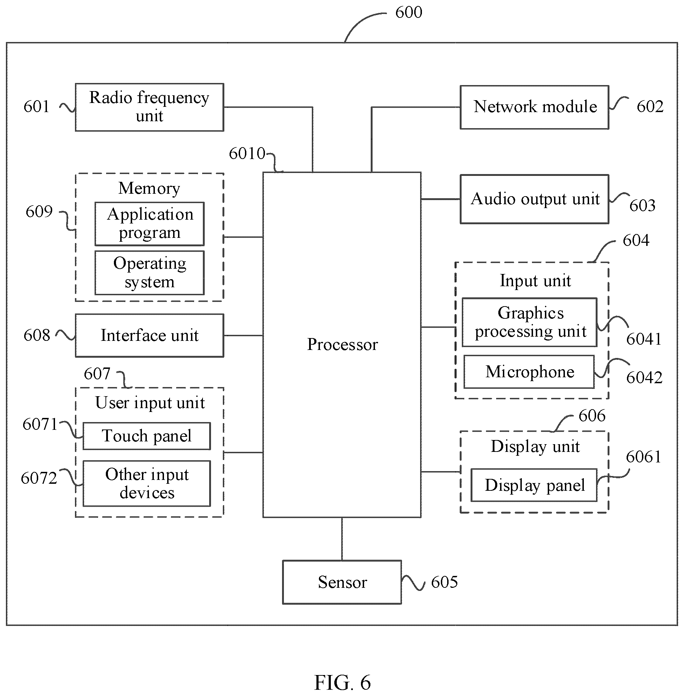

FIG. 6 is a schematic diagram of a hardware structure of a terminal according to an embodiment of this application.

The terminal 600 includes but is not limited to components such as a radio frequency unit 601, a network module 602, an audio output unit 603, an input unit 604, a sensor 605, a display unit 606, a user input unit 607, an interface unit 608, a memory 609, and a processor 6010.

Persons skilled in the art can understand that the terminal 600 may further include a power supply (such as a battery) for supplying power to the components. The power supply may be logically connected to the processor 6010 through a power management system. In this way, functions such as charge management, discharge management, and power consumption management are implemented by using the power management system. The structure of the terminal shown in FIG. 6 does not constitute any limitation on the terminal. The terminal may include more or fewer components than shown in the figure, or a combination of some components, or the components disposed differently. Details are not described herein again.

The processor 6010 is configured to prohibit the first SIM card that is conducting an IMS call from executing ENDC B1 measurement and/or disable ENDC capability of the second SIM card in a case that the terminal performs initial registration or location update; where
the terminal is currently able to use mobile data through the first SIM card, and the terminal is currently unable to use mobile data through the second SIM card.

In this embodiment of this application, when the terminal performs initial registration or location update in an ENDC network, the first SIM card that is conducting an IMS call is prohibited from executing ENDC B1 measurement, and the ENDC capability of the second SIM card is disabled, so that the first SIM card fails to execute ENDC B1 measurement, thereby reducing power consumption of the terminal. Since the ENDC capability of the second SIM card is disabled, actions such as SCG addition cannot be performed again, ensuring that the first SIM card is prevented from lag caused by interference when using mobile data, thus improving the user experience in network use.

Optionally, the radio frequency unit 601 is further configured to report first capability information to a network-side device, where the first capability information indicates that the second SIM card does not support ENDC capability.

Optionally, the processor 6010 is further configured to enable the first SIM card of the terminal to perform ENDC B1 measurement in a case that the IMS call on the first SIM card has ended.

Optionally, the processor 6010 is further configured to acquire first capability information for indicating whether a target card of the terminal supports ENDC, second capability information for indicating whether a network-side device currently connected to the terminal supports ENDC, and third capability information for indicating whether the network-side device currently connected to the terminal restricts the terminal from accessing an ENDC network; and
to determine a network icon corresponding to the target card based on the first capability information, the second capability information, and the third capability information, where the target card is the first SIM card or the second SIM card.

Optionally, the processor 6010 is further configured to display the network icon corresponding to the target card as a 5G icon in a case that the network-side device currently connected to the terminal supports ENDC, the target card supports ENDC, and the network-side device does not restrict the terminal from accessing the ENDC network;
to display the network icon corresponding to the target card as a 4G icon in a case that the network-side device currently connected to the terminal does not support ENDC; and
to display the network icon corresponding to the target card as a 4G icon in a case that the network-side device currently connected to the terminal supports ENDC, the target card of the terminal does not support ENDC, and the target card is the first SIM card.

Optionally, the processor 6010 is further configured to acquire target information in a case that the first capability information indicates that the second SIM card does not support ENDC capability, where the target information is used to indicate whether the ENDC capability of the second SIM card is disabled.

Optionally, the processor 6010 is further configured to display a network icon corresponding to the second SIM card as a 5G icon in a case that the network-side device currently connected to the terminal supports ENDC, the target information indicates that the ENDC capability of the second SIM card is disabled, and the network-side device does not restrict the terminal from accessing the ENDC network; and
to display the network icon corresponding to the second SIM card as a 4G icon in a case that the network-side device currently connected to the terminal supports ENDC, and the target information indicates that the ENDC capability of the second SIM card is not disabled.

It should be understood that in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, and the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function key (such as a volume control key or an on/off key), a trackball, a mouse, and a joystick. Details are not described herein.

The memory 609 may be configured to store a software program and various data. The memory 609 may mainly include a first storage area for storing a program or instruction and a second storage area for storing data. The first storage area may store an operating system, an application program or instruction required by at least one function (for example, a sound play function or an image play function), and the like. In addition, the memory 609 may be a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes but is not limited to these or any other applicable types of memories.

The processor 6010 may include one or more processing units. Optionally, the processor 6010 may integrate an application processor and a modem processor. The application processor primarily processes operations involving an operating system, user interface, application program, and the like. The modem processor primarily processes radio communication signals, for example, being a baseband processor. It can be understood that the modem processor may alternatively be not integrated in the processor 6010.

An embodiment of this application further provides a readable storage medium, where the readable storage medium stores a program or instruction. When the program or instruction is executed by a processor, the processes of the foregoing communication processing method embodiment can be implemented, with the same technical effects achieved. To avoid repetition, details are not described herein again.

The processor is a processor in the terminal described in the foregoing embodiment. The readable storage medium includes a computer-readable storage medium such as a computer read-only memory, a random access memory, a magnetic disk, or an optical disc.

An embodiment of this application further provides a chip. The chip includes a processor and a communication interface. The communication interface is coupled to the processor. The processor is configured to run a program or instruction to implement the processes of the foregoing communication processing method embodiment, with the same technical effect achieved. To avoid repetition, details are not described herein again.

It should be understood that the chip mentioned in this embodiment of this application may also be referred to as a system-level chip, a system chip, a chip system, a system-on-chip, or the like.

An embodiment of this application provides a computer program product. The program product is stored in a storage medium. The program product is executed by at least one processor to implement the processes of the foregoing communication processing method embodiment, with the same technical effects achieved. To avoid repetition, details are not described herein again.

It should be noted that in this specification, the terms "include", "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

Based on the foregoing description of the embodiments, persons skilled in the art may clearly understand that the method in the foregoing embodiment can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A communication processing method, applied to a terminal comprising a first SIM card and a second SIM card, wherein the method comprises:
in a case that the terminal performs initial registration or location update, prohibiting the first SIM card that is conducting an IMS call from executing ENDC B1 measurement, and/or disabling ENDC capability of the second SIM card; wherein
the terminal is currently able to use mobile data through the first SIM card, and the terminal is currently unable to use mobile data through the second SIM card.

2. The method according to claim 1, after the disabling ENDC capability of the second SIM card, further comprising: reporting first capability information to a network-side device, wherein the first capability information indicates that the second SIM card does not support ENDC capability.

3. The method according to claim 1, after the prohibiting ENDC B1 measurement of the first SIM card, further comprising: in a case that the IMS call on the first SIM card has ended, enabling the first SIM card to execute ENDC B1 measurement.

4. The method according to claim 1, wherein the method further comprises:
acquiring first capability information for indicating whether a target card of the terminal supports ENDC, second capability information for indicating whether a network-side device currently connected to the terminal supports ENDC, and third capability information for indicating whether the network-side device currently connected to the terminal restricts the terminal from accessing an ENDC network; and
determining a network icon corresponding to the target card based on the first capability information, the second capability information, and the third capability information, wherein the target card is the first SIM card or the second SIM card.

5. The method according to claim 4, wherein the determining a network icon corresponding to the target card based on the first capability information, the second capability information, and the third capability information comprises:
in a case that the network-side device currently connected to the terminal supports ENDC, the target card supports ENDC, and the network-side device does not restrict the terminal from accessing the ENDC network, displaying the network icon corresponding to the target card as a 5G icon;
in a case that the network-side device currently connected to the terminal does not support ENDC, displaying the network icon corresponding to the target card as a 4G icon; and
in a case that the network-side device currently connected to the terminal supports ENDC, the target card does not support ENDC, and the target card is the first SIM card, displaying the network icon corresponding to the target card as a 4G icon.

6. The method according to claim 4, wherein the target card is the second SIM card; and before the determining a network icon corresponding to the target card based on the first capability information, the second capability information, and the third capability information, the method further comprises:
in a case that the first capability information indicates that the second SIM card does not support ENDC capability, acquiring target information, wherein the target information is used to indicate whether the ENDC capability of the second SIM card is disabled; and
the determining a network icon corresponding to the target card based on the first capability information, the second capability information, and the third capability information comprises:
in a case that the network-side device currently connected to the terminal supports ENDC, the target information indicates that the ENDC capability of the second SIM card is disabled, and the network-side device does not restrict the terminal from accessing the ENDC network, displaying a network icon corresponding to the second SIM card as a 5G icon; and
in a case that the network-side device currently connected to the terminal supports ENDC, and the target information indicates that the ENDC capability of the second SIM card is not disabled, displaying the network icon corresponding to the second SIM card as a 4G icon.

7. A communication processing apparatus, applied to a terminal comprising a first SIM card and a second SIM card, wherein the apparatus comprises:
a processing module, configured to prohibit the first SIM card that is conducting an IMS call from executing ENDC B1 measurement and/or disable ENDC capability of the second SIM card in a case that the terminal performs initial registration or location update; wherein
the terminal is currently able to use mobile data through the first SIM card, and the terminal is currently unable to use mobile data through the second SIM card.

8. The apparatus according to claim 7, further comprising:
a reporting module, configured to report first capability information to a network-side device, wherein the first capability information indicates that the second SIM card does not support ENDC capability.

9. The apparatus according to claim 7, further comprising:
a recovery module, configured to enable the first SIM card to perform ENDC B1 measurement in a case that the IMS call on the first SIM card has ended.

10. The apparatus according to claim 7, further comprising:
a first acquiring module, configured to acquire first capability information for indicating whether a target card of the terminal supports ENDC, second capability information for indicating whether a network-side device currently connected to the terminal supports ENDC, and third capability information for indicating whether the network-side device currently connected to the terminal restricts the terminal from accessing an ENDC network; and
a determining module, configured to determine a network icon corresponding to the target card based on the first capability information, the second capability information, and the third capability information, wherein the target card is the first SIM card or the second SIM card.

11. The apparatus according to claim 10, wherein the determining module comprises:
a first determining unit, configured to display the network icon corresponding to the target card as a 5G icon in a case that the network-side device currently connected to the terminal supports ENDC, the target card of the terminal supports ENDC, and the network-side device does not restrict the terminal from accessing the ENDC network;
a second determining unit, configured to display the network icon corresponding to the target card as a 4G icon in a case that the network-side device currently connected to the terminal does not support ENDC; and
a third determining unit, configured to display the network icon corresponding to the target card as a 4G icon in a case that the network-side device currently connected to the terminal supports ENDC, the target card of the terminal does not support ENDC, and the target card is the first SIM card.

12. The apparatus according to claim 10, wherein the target card is the second SIM card; and the apparatus further comprises:
a second acquiring module, configured to acquire target information in a case that the first capability information indicates that the second SIM card does not support ENDC capability, wherein the target information is used to indicate whether the ENDC capability of the second SIM card is disabled; and
the determining module comprises:
a fourth determining unit, configured to display a network icon corresponding to the second SIM card as a 5G icon in a case that the network-side device currently connected to the terminal supports ENDC, the target information indicates that the ENDC capability of the second SIM card is disabled, and the network-side device does not restrict the terminal from accessing the ENDC network; and
a fifth determining unit, configured to display the network icon corresponding to the second SIM card as a 4G icon in a case that the network-side device currently connected to the terminal supports ENDC, and the target information indicates that the ENDC capability of the second SIM card is not disabled.

13. A terminal, comprising a processor and a memory, wherein the memory stores a program or instruction capable of running on the processor, and when the program or instruction is executed by the processor, the steps of the communication processing method according to any one of claims 1 to 6 are implemented.

14. A readable storage medium, wherein the readable storage medium stores a program or instruction, and when the program or instruction is executed by a processor, the steps of the communication processing method according to any one of claims 1 to 6 are implemented.

15. A chip, wherein the chip comprises a processor and a communication interface, the communication interface is coupled to the processor, and the processor is configured to execute a program or instruction to implement the steps of the communication processing method according to any one of claims 1 to 6.

16. A computer program product, wherein the program product is stored in a storage medium, and the program product is executed by at least one processor to implement the steps of the communication processing method according to any one of claims 1 to 6.
